# EUROPEAN PATENT SPECIFICATION

(11) **EP 0 199 522 B1**
(45) Date of publication and mention of the grant of the patent: **07.01.1993**
(21) Application number: 86302761.1
(22) Date of filing: 14.04.1986
(51) Int. Cl.: G11B 5/17, G11B 5/31

(54) **Step-up type magnetic head**
Magnetkopf mit Aufwärtstransformator
Tête magnétique à transformateur-élévateur

(30) Priority: 18.04.1985 JP 83165/85
(43) Date of publication of application: 29.10.1986
(73) Proprietor: MATSUSHITA ELECTRIC INDUSTRIAL CO., LTD., Kadoma-shi, Osaka-fu, 571 (JP)
(72) Inventor: Nakamura, Kazuo, Toyonaka-shi (JP); Takahashi, Ken, Suita-shi (JP)
(74) Representative: Sorrell, Terence Gordon

(56) References cited:
- GB-A- 1 494 087
- PATENT ABSTRACTS OF JAPAN, vol. 7, no. 160 (P-210)[1305], 14th July 1983; & JP-A-58 68 210
- PATENT ABSTRACTS OF JAPAN, vol. 5, no. 175 (P-88)[847], 11th Novembre 1981; & JP-A-56 105 319

## Description

The present invention relates to a magnetic head of the step-up type, comprising a thin film magnetic head circuit formed on a lower substrate; a transformer magnetic circuit including magnetic thin films formed on said lower substrate and a magnetic core having a lower edge which contacts said magnetic thin films to form a substantially closed transformer magnetic circuit encompassing a winding groove formed across the lower edge of said magnetic core; a thin film coil of a closed loop formed over said lower substrate to interlink both of said head magnetic circuit and said transformer magnetic circuit; and a transformer secondary bulk coil interlinking said transformer magnetic circuit.

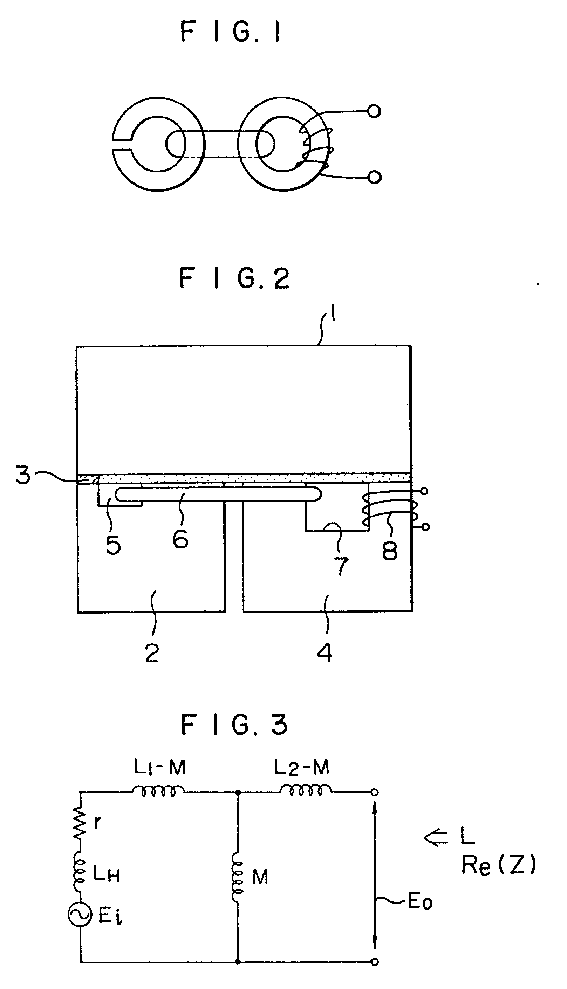

Particular use of the invention may be made in magnetic heads for video recording equipment, often designated as having video head shape. A known arrangement for a head of the aforesaid type is shown in Fig. 1. According to such an arrangement, the output from the device is increased by reducing the number of signal windings and miniaturising the magnetic circuit interlinked therewith, the low absolute output due to the small number of windings being compensated by the step-up transformer. Fig. 2 shows a conventional head suitable for use in video equipment, in which reference numerals 1 and 2 denote magnetic head cores which confront one another to form a head gap 3 and numeral 4 indicates a half body of a transformer core. This half body is disposed to face the rear portion of the head core, thereby forming the transformer core of a substantially ring-shaped magnetic path. A metal layer 5 is embedded into a groove formed to divide the head core 2 into the front gap portion and the back gap portion and coil 6 of one turn passes through a central groove 7 of the transformer core 4. The edge portion of the coil 6 is connected to the edge portion of the metal layer 5, thereby forming the closed loop coil of one turn, which interlinks the head magnetic circuit and transformer magnetic circuit. A secondary coil 8 of the transformer is provided and, in this way, a head arrangement equivalent of that shown in Figure 1, is obtained.

The head core portion and the one-turn winding shown in Figure 2, are provided in a so-called bulk constitution and, consequently, the one-turn inductance and DC resistance of the head cannot be sufficiently reduced by reductions possible to the size of the head magnetic circuit and the one-turn winding. Furthermore, since the arrangement of the primary and secondary coils of the transformer section is not correct, a sufficiently high coupling coefficient of the transformer cannot be obtained.

A simple equivalent circuit of the head shown in Fig. 1 is shown in Fig. 3, in which the DC resistance and stray capacitance of the secondary coil are omitted. L₁ and L₂ denote self inductances of the primary and secondary coils of the transformer respectively; M denotes a mutual inductance between the primary and secondary coil; Lₕ is an inductance of the one-turn head; r is a DC resistance of one-turn, including both of the winding of the head and the primary coil of the transformer; Eᵢ a reproduced voltage which is induced in the head winding; and E₀ a secondary output of the transformer.

The significant factors in the actual use of such a head are the inductance L, real part Re(Z) of the impedance and transfer efficiency ${\text{G = E₀/E}}_{\text{i}}$ of the whole structure including the head and the transformer.

The high frequency operational range of the head is determined by L. When the frequency is sufficiently high, the value of L can be calculated by the following expression from Fig. 3.

${\text{L = L}}_{\text{H}} \text{· N² + L₂(1 - K²) (1)}$

N is a number of secondary coil windings (i.e., step-up ratio) of the transformer and K is a coupling coefficient of the transformer. Although the first term (L_{H} · N²) of expression (1) is the inductance which is inevitably generated irrespective of the performance of the transformer, the second term is the amount which is added when the transformer is not ideal. Since it is necessary to set N to a value as large as possible for the value of L which can be allowed in use, L_{H} needs to be set to an enough small value. In addition, it is necessary to minimize the second term of expression (1) by setting K to a value as sufficiently close as "1" by increasing the coupling degree of the transformer.

Next, the impedance noise is determined by Re(Z) and a lower value of Re(Z) is better. At a frequency higher than the low-band cut-off frequency, Re(Z) can be calculated by the following expression. 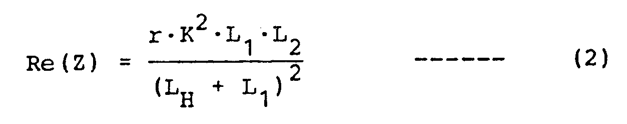
Assuming that L_{H} is smaller than L₁, expression (2) can be approximated by the following expression. 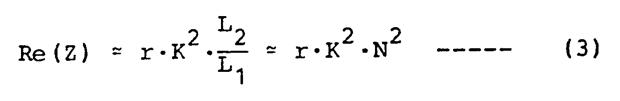
The one-turn resistance value r on the primary side is nearly transformed into the value multiplied by square of the step-up ratio, i.e., rN² on the secondary side. Therefore, r needs to be set to an enough low value.

Further, the transfer efficiency G becomes 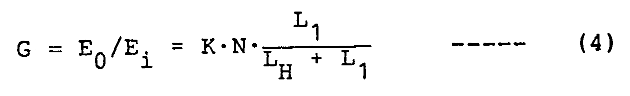
at a frequency above the low-band cut-off frequency. Assuming that L_{H} is smaller than L₁ similarly,

$\text{G ≃ K·N (5)}$

The transfer efficiency is reduced by the value of K from the step-up ratio N. Therefore, K needs to be set to a value as sufficiently close as "1".

To obtain the high performance characteristics of the head including the step-up transformer as mentioned above, it is required that the inductance and DC resistance of the one-turn portion of the head are sufficiently small and the coupling coefficient of the transformer is sufficiently close to "1". These conditions are not fully satisfied in the conventional example.

An alternative to the bulk constitution for a transformer in apparatus for the recording and reproduction of data via a magnetic medium, is disclosed in United Kingdom Patent No. 1 494 087. In accordance with this disclosure, transformer windings are produced by depositing layers of electrically conductive, magnetic and electrically insulating materials onto a substrate. A first conductive layer is deposited onto an insulating layer. This layer is the first of four conductive layers, which together form a transformer winding, which comprises a rectangular five-turn spiral with an outer terminal pad and an inner terminal pad. However, the physical dimensions of such a spiral structure is not suitable for all applications and, in particular, it is not suitable for the video head shape. In specification No. JP-A-56 105 319 there is disclosed a transformer secondary bulk coil; an upper magnetic portion provided with a groove formed across the lower edge in said magnetic portion; said magnetic portion contacts the magnetic thin films formed on the upper edge of the lower substrate to form a substantially closed-transformer magnetic circuit encompassing said groove.

According to the present invention, there is provided a magnetic head of the aforesaid type, characterised in that said lower substrate comprises a parallelepiped shaped member having planar surfaces bordered with an upper edge supporting said thin film magnetic head circuit and said magnetic thin films and with an operative front edge adjacent to said upper edge, said upper edge and said front edge being substantially narrower than said planar surfaces;
said magnetic core being part of an upper substrate comprising a parallelepiped shaped member having planar surfaces bordered with a lower edge including the lower edge of said magnetic core and an operative front edge adjacent thereto, said lower edge and said front edge being substantially narrower than said planar surfaces; said upper substrate has a non-magnetic portion adjacent said operative front edge of said magnetic core and contacting the thin film magnetic head circuit formed on the upper edge of the lower substrate adjacent said operative front edge thereof;
said transformer secondary bulk coil has a first winding wound around the magnetic portion of said upper substrate and through said groove and a second winding wound around the lower substrate and passing through said groove; said first winding and said second winding are connected as balanced windings and are electromagnetically coupled with said thin film coil through said transformer magnetic circuit; wherein said operative front edges form a substantially continuous operative surface of the head, arranged to face a magnetic medium during operation of the head.

The invention will now be described by way of example only, with reference to the accompanying drawings, in which:
Fig. 1 is a plan view showing the principle of step-up type magnetic head;
Fig. 2 is a plan view showing a conventional example of a step-up type magnetic head;
Fig. 3 is a diagram showing an equivalent circuit of a step-up type magnetic head;
Fig. 4 is a plan view showing an embodiment of the present invention;
Fig. 5 is a cross sectional view taken along line A-A' in Fig. 4;
Fig. 6 is a plan view showing another embodiment of the invention;
Fig. 7 is a partial cross sectional view showing still another embodiment of the invention;
Fig. 8 is a partial cross sectional view showing still another embodiment of the invention; and,
Fig. 9 is partial cross sectional view showing still another embodiment of the invention.

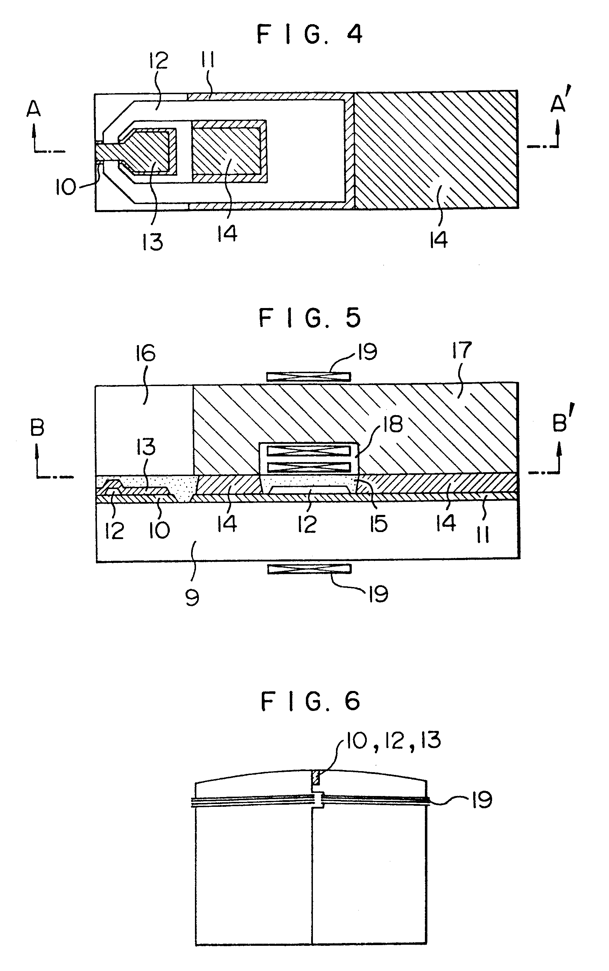

A plan view of a magnetic head is shown in Fig. 4 and a cross sectional view of said head is shown in Fig. 5, taken along line A-A' in Fig. 4. In Fig. 4, the portion over the line B-B' in Fig. 5 and a secondary coil of a transformer are omitted for convenience of drawing.

In Figs. 4 and 5, reference numeral 9 denotes a non-magnetic lower substrate. A lower head core 10 and a lower transformer core 11 are formed on the lower substrate 9 by a magnetic thin film and are patterned, respectively. A one-turn coil 12 of a thin film of a closed loop is formed so as to be insulated from the magnetic thin films 10 and 11, as shown in the diagram. The portion of the coil 12 near the head magnetic circuit constitutes the one-turn signal winding of the head and the portion of the coil 12 near the transformer magnetic circuit constitutes a primary one-turn winding of the transformer. A non-magnetic gap layer of a predetermined thickness is formed in the portion of the lower head core 10 where a head gap is to be constituted.
Thereafter, an upper head core 13 of the head magnetic circuit is formed by a magnetic thin film. On the other hand, a magnetic mid-layer 14 is formed on the lower transformer core 11 by a magnetic thin film. A non-magnetic insulating layer 15 is formed so as to bury concave portions formed due to the formation of the foregoing respective thin film patterns. The upper surface of the insulating layer 15 is polished and worked so as to obtain the flat surface as shown by the line B-B' which includes the top surface of the magnetic mid-layer 14.

In the foregoing respective thin-film production processes, a vacuum evaporated film or sputtered film of permalloy or amorphous alloy is suitable for the magnetic film portion; a vacuum evaporated film or sputtered film of Cu or Aℓ is suitable for the coil layer; and a sputtered film of SiO₂ or AℓO₃ is suitable for the insulating layer film, respectively.

The portion over the line B-B' in Fig. 5 is the upper substrate in which a non-magnetic block 16 and a bulk magnetic block 17 are joined. The magnetic portion is formed with a winding groove 18 for the transformer secondary coil. Their bottom surfaces along the line B-B' are polished so as to obtain the substantially flat surface. Glass, forsterite porcelain, barium titanate porcelain, or the like is suitable for the non-magnetic portion. Mn-Zn ferrite or the like is suitable for the magnetic block portion. The glass bonding is suitable to join the non-magnetic portion and magnetic block portion.

The upper substrate prepared in this manner and the lower substrate finished through the foregoing thin film processes are joined at the position of Fig. 5. Although the glass bonding is desirable to join them, they may be bonded using an organic adhesive agent or the like in the case where the glass bonding will adversely influence on the magnetic thin layer or the like.

After the head formed in this way was worked to have a predetermined external shape or the like, the bulk winding is provided to form a secondary coil 19 of the transformer. The secondary coil 19 is divided by the upper magnetic circuit and lower magnetic circuit of the transformer and connected so as to form the balance winding.

As will be obvious from the above description of the embodiment, the one-turn head portion is constituted by the upper head core 13, lower head core 10, and one-turn coil 12. The transformer portion is constituted by the transformer magnetic circuit comprising the bulk magnetic block 17, magnetic mid-layer 14 and lower transformer core 11, and by the one-turn coil 12 and secondary coil 19 of a plurality of turns which are in interlinkage with the transformer magnetic circuit.

The head magnetic circuit and one-turn coil portion can be formed to have the necessary minimum sizes by the thin film technology, so that the one-turn inductance of the head and the DC resistance of the one-turn portion can be minimized. In addition, the transformer secondary coil is formed in the balance winding at the position near the primary coil, so that the coupling coefficient between both of the transformer coils can be increased than the conventional one. (When all of the magnetic fluxes which interlink the primary coil also interlink the secondary coil, the coupling coefficient becomes "1").

Although the one-turn head portion is illustrated in an enlarged scale than the other portions in Figs. 4 and 5 for convenience of explanation, it will be as shown in Fig. 6 in the case where the outside appearance of the head is drawn with the actual dimensional ratio as an actual application of this head to, e.g., a video head for use in a rotary cylinder. It will be understood from Fig. 6 that the outside appearance of the head is extremely similar to that of a so-called video type head and this head can be easily applied to the recording/reproducing apparatus of the rotary head type.

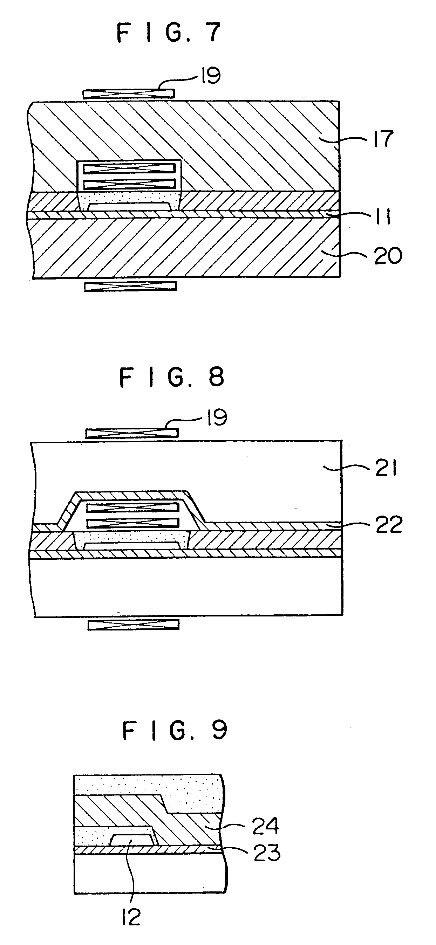

Another embodiment of the present invention will then be described. Fig. 7 is a diagram regarding the transformer portion and a substrate 20 under the lower transformer core 11 is constituted by a magnetic block. In this case, the lower transformer core 11 may be omitted. Such a constitution is effective in the case where the coercive force of the recording medium is large, the head drive current is large, and the magnetic saturation is likely to occur. In this case, it is desirable that the magnetic substrate 20 is not elongated to the head front surface in order to avoid possible recording/reproducing by the magnetic substrate 20.

In an embodiment of Fig. 8, the upper head core is constituted by a magnetic thin film 22 formed under a non-magnetic substrate 21 in which a recessed portion is formed, and all of the transformer magnetic circuit portions are formed by the thin film technology. Such a constitution is suitable as a magnetic head, particularly, in operation at a high frequency. In this embodiment as well, it is preferable that the magnetic film 22 is not elongated to the head front surface due to a reason similar to that in the foregoing embodiment.

Although the one-turn head portion has been constituted as a so-called ring-shaped head in each of the foregoing embodiments, in place of this, a perpendicular recording head of one turn shown in Fig. 9 may be also used. In Fig. 9, reference numeral 23 denotes a main pole for recording/reproducing; 24 is an auxiliary pole; and 12 the one-turn coil. In such a perpendicular recording head, as compared with the ring-shaped head shown in Figs. 4 and 5, its magnetic path is near an open magnetic path. Therefore, when the magnetic circuit is miniaturized, the improvement in efficiency is particularly typical and there is a large effect in combining the step-up transformer by the one-turn constitution.

Further, although the one-turn head portion has been shown in the above embodiment, the head may be also constituted by a few turns. In this case as well, the features of the invention mentioned above can be effected. When such a coil is actually manufactured, use can be made of well-known coil forming technology using thin films.

## Claims

1. A magnetic head of the step-up type, comprising
a thin film magnetic head circuit (10, 13) formed on a lower substrate (9);
a transformer magnetic circuit including magnetic thin films (11, 14) formed on said lower substrate (9) and a magnetic core having a lower edge which contacts said magnetic thin films (11, 14) to form a substantially closed-transformer magnetic circuit encompassing a winding groove (18) formed across the lower edge of said magnetic core;
a thin film coil (12) of a closed loop formed over said lower substrate (9) to interlink both of said head magnetic circuit and said transformer magnetic circuit; and,
a transformer secondary bulk coil (19) interlinking said transformer magnetic circuit: characterised in that, said lower substrate (9) comprises a parallelepiped shaped member having planar surfaces bordered with an upper edge supporting said thin film magnetic head circuit (10,13) and said magnetic thin films (11, 14), and with an operative front edge adjacent to said upper edge, said upper edge and said front edge being substantially narrower than said planar surfaces;
said magnetic core being part of an upper substrate (17) comprising a parallelepiped shaped member having planar surfaces bordered with a lower edge including the lower edge of said magnetic core and an operative front edge adjacent thereto, said lower edge and said front edge being substantially narrower than said planar surfaces;
said upper substrate has a non-magnetic portion (16) adjacent said operative front edge of said magnetic core and contacting the thin film magnetic head circuit (10, 13) formed on the upper edge of the lower substrate (9) adjacent said operative front edge thereof;
said transformer secondary bulk coil (19) has a first winding wound around the magnetic portion (17) of said upper substrate and through said groove (18) and a second winding wound around the lower substrate (9) and passing through said groove; said first winding and said second winding are connected as balanced windings and are electromagnetically coupled with said thin film coil (12) through said transformer magnetic circuit (11, 14); wherein said operative front edges form a substantially continuous operative surface of the head, arranged to face a magnetic medium during operation of the head.

2. A magnetic head according to claim 1, wherein said thin film coil (12) forms a single turn coupled with both said magnetic circuit (10,13) of said head core and said transformer magnetic circuit(11,14,17).

3. A magnetic head according to claim 1, wherein a part of the lower substrate (9) under said thin film magnetic layers (11,14) is formed of a bulk magnetic material.

4. A magnetic head according to claim 1, wherein said magnetic part of said upper substrate (17) comprises a bulk magnetic material.

5. A magnetic head according to claim 1, wherein said magnetic part of said upper substrate (17) comprises a thin film magnetic material (22).

## Patentansprüche

1. Ein aufwärtstransformierender Magnetkopf bestehend aus
einem Dünnfilm-Kopf-Magnetkreis (10,13) auf einem unteren Substrat (9);
einem Transformator-Magnetkreis mit magnetischen Dünnfilmen (11, 14) auf diesem unteren Substrat (9) und einem Magnetkern mit einem unteren Rand, der mit den magnetischen Dünnfilmen (11, 14) in Kontakt ist, um einen im wesentlichen geschlossenen Transformator - Magnetkreis zu bilden, der eine Wicklungsnut (18) umschließt, die quer über den unteren Rand dieses Magnetkerns ausgebildet ist;
einer Dünnfilmspule (12) aus einer geschlossenen Schleife über dem unteren Substrat (9) zur Verkettung des Kopf-Magnetkreises und des Transformator-Magnetkreises; und
einer Transformator-Sekundärspule (19), die den Transformator-Magnetkreis verkettet: dadurch gekennzeichnet, daß das untere Substrat (9) ein parallelepipedisch geformtes Teil mit planparallelen Flächen ist, das begrenzt wird von einem den Dünnfilm-Kopf-Magnetkreis (10,13) und die magnetischen Dünnfilme (11, 14) tragenden oberen Rand und von einer dem oberen Rand benachbarten Wirk-Vorderkante, wobei der obere Rand und die Vorderkante wesentlich schmäler als die planparallelen Flächen sind;
daß der als Teil eines oberen Substrates (17) ausgebildete Magnetkern, ein parallelepipedisches Teil mit planparallelen Flächen ist, das begrenzt wird am unteren Rand mit einer unteren Kante des Magnetkerns und einer benachbarten Wirk-Vorderkante, wobei der untere Rand und die Vorderkante wesentlich schmäler sind als die planparallelen Flächen;
daß weiter das obere Substrat einen nicht-magnetischen Teil (16) hat, der der Wirk-Vorderkante des Magnetkerns benachbart ist und mit dem Dünnfilm - Kopf - Magnetkreis (10, 13) am oberen Rand des unteren Substrates (9) in Nachbarschaft zur Wirk-Vorderkante in Kontakt steht;
daß schließlich die Transformator-Sekundärspule (19) ein erstes Wicklungsteil um den Magnetteil (17) des oberen Substrates und durch die Wicklungsnut (18) hat und ein zweites Wicklungsteil um das untere Substrat (9) und durch die besagte Wicklungsnut; wobei das erste und das zweite Wicklungsteil als abgeglichene Wicklungen elektromagnetisch mit der Dünnfilmspule (12) durch den Transformator-Magnetkreis (11,14) verbunden sind; und wobei die Wirk-Vorderkanten eine im wesentlichen durchlaufende Wirkfläche des Kopfes bilden, die im Betrieb des Kopfes einem magnetischen Aufzeichnungsmedium gegenüberliegt.

2. Ein Magnetkopf nach Anspruch 1 dadurch gekennzeichnet, daß die Dünnfilmspule (12) einwindig und sowohl mit den Magnetkreisen (10,13) des Kopfkerns wie mit dem Transformator-Magnetkreis (11, 14, 17) gekoppelt ist.

3. Ein Magnetkopf nach Anspruch 1 dadurch gekennzeichnet, daß ein Teil des unteren Substrates (9) unter den Dünnfilm-Magnetschichten (11, 14) aus einem Block Magnetmaterial besteht.

4. Ein Magnetkopf nach Anspruch 1 dadurch gekennzeichnet, daß der Magnetteil des oberen Substrates (17) aus einem Block Magnetmaterial besteht.

5. Ein Magnetkopf nach Anspruch 1 dadurch gekennzeichnet, daß der Magnetteil des oberen Substrates (17) aus einem Dünnfilm-Magnetmaterial (22) besteht.

## Revendications

1. Tête magnétique du type à transformateur-élévateur, comprenant :
un circuit de tête magnétique (10,13) en film mince, formé sur un substrat inférieur (9);
un circuit magnétique de transformateur, comportant des films magnétiques minces (11,14), formés sur ledit substrat inférieur (9), et un noyau magnétique ayant un bord inférieur qui est en contact avec lesdits films magnétiques minces (11,14) afin de former un circuit magnétique de transformateur pratiquement ferme, qui entoure une encoche (18) pour un enroulement, laquelle est formée dans le bord inférieur dudit noyau magnétique;
une bobine (12) en film mince, en boucle fermée, qui est formée sur ledit substrat inférieur (9) afin d'accoupler l'un à l'autre ledit circuit de tête magnétique et ledit circuit magnétique de transformateur; et
une bobine massive (19) de secondaire de transformateur, qui est couplée audit circuit magnétique de transformateur;
caractérisée en ce que :
ledit substrat inférieur (9) est constitué par un élément en forme de parallélépipède, ayant des surfaces planes bordées par un bord supérieur, qui supporte ledit circuit de tête magnétique (10, 13) en film mince et lesdits films magnétiques minces (11,14), et par un bord frontal de travail adjacent audit bord supérieur, ledit bord frontal et ledit bord supérieur étant nettement plus étroits que lesdites surfaces planes;
ledit noyau magnétique fait partie d'un substrat supérieur (17), qui est constitué par un élément en forme de parallélépipède, qui possède des surfaces planes bordées par un bord inférieur, incluant le bord inférieur dudit noyau magnétique, et un bord frontal de travail adjacent au bord inférieur, ledit bord frontal et ledit bord inférieur étant nettement plus étroits que lesdites surfaces planes;
ledit substrat supérieur possède une partie amagnétique (16), qui est adjacente audit bord frontal de travail du noyau magnétique et qui est en contact avec le circuit de tête magnétique (10,13) en film mince formé sur le bord supérieur du substrat inférieur (9) près du bord frontal de travail de ce dernier;
ladite bobine massive (19) de secondaire de transformateur possède un premier enroulement, qui est enroulé autour de la partie magnétique (17) dudit substrat supérieur et qui passe à travers ladite encoche (18), et un second enroulement, qui est enroulé autour du substrat inférieur (9) et qui passe à travers ladite encoche; lesdits premier et second enroulements sont connectés comme des enroulements équilibrés et sont couplés électromagnétiquement à ladite bobine (12) en film mince par l'intermédiaire du circuit magnétique de transformateur (11,14); lesdits bords frontaux de travail forment une surface active sensiblement continue de la tête magnétique, qui est agencée pour faire face à un milieu magnétique d'enregistrement pendant le fonctionnement de la tête.

2. Tête magnétique selon la revendication 1, dans laquelle ladite bobine (12) on film mince forme une spire unique, couplée à la fois audit circuit magnétique (10,13) de la tête magnétique et audit circuit magnétique de transformateur (11,14,17).

3. Tête magnétique selon la revendication 1, dans laquelle une partie du substrat inférieur (9) située sous lesdites couches magnétiques (11,14) en film mince est formée d'un matériau magnétique massif.

4. Tête magnétique selon la revendication 1, dans laquelle ladite partie magnétique dudit substrat supérieur (17) est constituée par un matériau magnétique massif.

5. Tête magnétique selon la revendication 1, dans laquelle ladite partie magnétique dudit substrat supérieur (17) est constituée par un matériau magnétique (22) en film mince.
